(19) Europäisches Patentamt
European Patent Office
Office européen des brevets

(11) **EP 2 350 172 B1**

(12) **EUROPEAN PATENT SPECIFICATION**

(45) Date of publication and mention
of the grant of the patent:
**03.12.2014 Bulletin 2014/49**

(51) Int Cl.:
***C08J 3/20*** *(2006.01)*     ***B29B 7/40*** *(2006.01)*
***B29B 7/90*** *(2006.01)*     ***B29B 7/00*** *(2006.01)*

(21) Application number: **09756696.2**

(86) International application number:
**PCT/EP2009/064396**

(22) Date of filing: **30.10.2009**

(87) International publication number:
**WO 2010/049528 (06.05.2010 Gazette 2010/18)**

(54) **METHOD FOR THE PREPARATION OF PRE-REINFORCED AND REINFORCED PVC POLYMERS AND DEVICES THEREOF**

VERFAHREN ZUR HERSTELLUNG VON VORVERSTÄRKTEN UND VERSTÄRKTEN PVC-POLYMEREN UND VORRICHTUNGEN DAVON

PROCÉDÉ DE PRÉPARATION DE POLYMÈRES DE PVC PRÉ-RENFORCÉS ET RENFORCÉS, DISPOSITIFS CORRESPONDANTS

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **31.10.2008 BE 200800594**
              **31.10.2008 US 110361 P**

(43) Date of publication of application:
**03.08.2011 Bulletin 2011/31**

(73) Proprietor: **Eurocell Profiles, Ltd.**
**Alfreton**
**Derbyshire DE55 4RF (GB)**

(72) Inventors:
• **BUSSELS, Raf**
  **B-3990 Peer (BE)**
• **GABRIELS, Joseph Philip**
  **B-3980 Tessenderlo (BE)**
• **SPIJKERMAN, Christianus Johannes**
  **NL-7552 CK Hengelo (NL)**

(74) Representative: **Paemen, Liesbet R.J. et al**
**De Clercq & Partners cvba**
**Edgard Gevaertdreef 10 a**
**9830 Sint-Martens-Latem (BE)**

(56) References cited:
US-A- 3 786 011      US-A- 4 239 679
US-A- 4 368 284      US-A- 4 430 460
US-A1- 2004 132 875

**Description**

**Technical field**

The present invention relates to a method for the preparation of a pre-reinforced and reinforced polymer based on a polyvinyl chloride polymer. The invention also relates to a method for the preparation of a reinforced polyvinyl chloride device.

**Background**

Polyvinyl chloride polymer (PVC) is a synthetic material that can be applied in various industries, like for example to replace wood or metal, thanks to its versatile physical and chemical characteristics. The characteristics of PVC can be changed with the help of fillers and other additives, in order to obtain PVC devices that have the desired characteristics. For example, the use of PVC devices for sidings requires a material that does not expand, sag or bend when exposed to heat.

Large quantities of filler must be used, in order to be able to sufficiently decrease the coefficient of linear thermal expansion (CLTE). The known methods, however, have the disadvantage that quantities that can be used are limited, for example because of mixing problems. In order to fix this problem, the use of reinforcing fibres was introduced and increased. Increased quantities of glass fibres were used in US 2007/0078181. However, the introduction of glass fibres leads to increased production failure and repair costs because of the abrasive characteristics of the fibres on the processing equipment. These fillers must also be avoided for health reasons related to inhaling of glass fibre dust.

The use of alternative reinforcing fibres, like synthetic fibres (aramid or carbon fibres) or natural fibres (flax, wood fibres), leads to a substantial increase in raw material costs. Moreover these fibres significantly hamper the processing of PVC. A disadvantage of natural fibres is their variable composition and, consequently, their fluctuating quality. In addition, they are sensitive to humidity, hence they can rot and mould, even when incorporated into a PVC profile.

In the light of the above mentioned properties, there is a need for new methods for producing reinforced polyvinyl chloride polymers and polyvinyl chloride devices. The objective of this invention is to at least partially solve the problems mentioned above. For this purpose the invention provides a method in which large quantities of cheap and non-abrasive naturally occurring mineral fillers can be applied.

US 4,239,679 discloses the preparation of a PVC resin powder composition comprising a filler, wherein at least a portion of the filler is withheld from the composition during an initial mixing cycle in a high shear mixer at an elevated temperature, while the remainder of the filler is added after the composition has been cooled to a temperature of 175°F or less.

US 4,368,284 discloses the preparation of a composite material comprising PVC and talc, wherein PVC and talc are blended at a temperature below 80°C, and subsequently pelletized at 180°C.

US 4,430,460 discloses the preparation of conductive PVC molding compositions, involving the addition of carbon black to PVC in several stages at increasing temperatures.

**Summary**

The objective of this invention is to provide a method for manufacturing pre-reinforced and reinforced polymers based on polyvinyl chloride, as well as reinforced devices made of pre-reinforced or reinforced PVC polymers, which are obtainable according to a method of the invention.

In more detail, the invention relates to a method for the preparation of a reinforced polyvinyl chloride device comprising the steps:

a) preparation of a pre-reinforced polymer by mixing polyvinyl chloride polymer with a quantity A of a naturally occurring mineral filler at a temperature lower than the melting temperature of the polyvinyl chloride polymer; and
b) mixing the pre-reinforced polymer obtained under a) with a quantity B of a naturally occurring mineral filler at a temperature higher than 180 °C to obtain a reinforced polyvinyl chloride polymer.

In particular embodiments of the method, the naturally occurring mineral filler is selected from a group including wollastonite, vermiculite, talc, mica, and/or combinations thereof.

In certain embodiments of the method, the naturally occurring mineral filler is talc and/or mica. In particular embodiments, the total quantity of naturally occurring mineral filler (A+B) to the quantity of polyvinyl chloride polymer, is preferably between 0.4 and 2.5, more preferably between 0.6 and 1.5, most preferably between 0.8 and 1.2.

In certain embodiments, the ratio of quantity A over quantity B is at least 0.1, preferably at least 0.2, more preferably at least 0.25, most preferably at least 0.3.

In particular embodiments, step a) the quantity A of a naturally occurring mineral filler is between 2-25 phr or between 25-40 phr.

In certain embodiments, the total number of naturally occuringmineral filler parts (A+B) with regard to the number of polyvinyl chloride polymer parts is between 0.4 and 2.5.

In particular embodiments, the ratio of quantity A over quantity B of naturally occurring mineral filler is at least 0.1, and wherein the total quantity of naturally occurring mineral filler (A+B) to the quantity of polyvinyl chloride polymer is between 60 and 250 phr.

In certain embodiments, the naturally occurring mineral filler comprises talc, mica, or both, and wherein the reinforced polyvinyl chloride polymer contains said naturally occurring mineral filler in a quantity between 35 and 70 weight %.

In particular embodiments, the reinforced polyvinyl chloride polymer comprises at least 35 weight% of polyvinylchloride polymer and at least 40 weight%, preferably at least 45 weight%, of said naturally occurring mineral filler, wherein said naturally occurring mineral filler is talc, mica, or both.

In certain embodiments, step a) the temperature lower than the melting temperature of a polyvinylchloride polymer is a temperature lower than 130 °C, and wherein the quantity A of a naturally occurring mineral filler is between 2-25 phr.

In particular embodiments, a temperature higher than 180°C is obtained by extrusion.

In certain embodiments, the pre-reinforced polymer obtained in step a) is granulated in step b). In certain embodiments, the reinforced polyvinyl chloride polymer obtained in step b) is processed into a reinforced polyvinyl chloride device, preferably a profile, for example by profile extrusion.

In particular embodiments, the reinforced polyvinyl chloride polymer obtained in step b) is processed into a reinforced polyvinyl chloride device by profile extrusion.

In certain embodiments, the pre-reinforced polymer obtained by step a) and the quantity B of naturally occurring mineral filler, are added to an extruder separately.

In particular embodiments, the polyvinylchloride polymer preferably has a K-value between 50 and 68, more preferably between 60 and 68, most preferably between 64 and 68; or preferably has a K-value between 50 and 60, more preferably between 50 and 58, most preferably around 57.

In certain embodiments, the method further comprises the step of adding a processing aid in a quantity of between 0 and 15 weight%; preferably between 5 and 15 weight%.

In particular embodiments, the method further comprises the step of adding a thermal stabilizer in a quantity of between 0 and 5 weight%; preferably between 1 and 4 weight%; wherein said thermal stabilizer is preferably a blocked thiol type stabilizer.

A method according to the invention has the advantage that relatively large quantities of naturally occurring mineral filler can be applied and no mixing and/or segregation problems will arise during the preparation or the pneumatic transportation of the pre-reinforced polymer. Moreover, the naturally occurring mineral fillers are cheap, they can be easily obtained and they are not abrasive. A method according to the invention has the additional advantage that pre-reinforced and/or reinforced polymers can be processed easily and that the processing shows fewer failure problems. A method according to the invention is less susceptible to melting problems of an extruder feed. A method according to the invention results in quality products with a smooth surface, a homogeneous composition, and with improved characteristics such as thermal expansion and stiffness.

In order to better illustrate the invention, an example of some preferred embodiments, but not limiting in nature, will be described below.

## Description of the invention

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps.

The terms "comprising", "comprises" and "comprised of" also include the term "consisting of". The recitation of numerical ranges by endpoints includes all numbers and fractions subsumed within the respective ranges, as well as the recited endpoints.

The term "about" as used herein when referring to a measurable value such as a parameter, an amount, a temporal duration, and the like, is meant to encompass variations of +/-10% or less, preferably +/-5% or less, more preferably +/-1% or less, and still more preferably +/-0.1 % or less of and from the specified value, insofar such variations are appropriate to perform in the disclosed invention. It is to be understood that the value to which the modifier "about" refers is itself also specifically, and preferably, disclosed.

Unless otherwise defined, all terms used in disclosing the invention, including technical and scientific terms, have the meaning as commonly understood by one of ordinary skill in the art to which this invention belongs. By means of further guidance, definitions for the terms used in the description are included to better appreciate the teaching of the present invention.

The invention relates to a method for the production of pre-reinforced and reinforced polymers based on polyvinyl chloride, as well as reinforced devices made of pre-reinforced or reinforced PVC polymers obtained with a method of the invention.

In more detail, the invention relates to a method for the preparation of a reinforced polyvinyl chloride device including the following steps:

a) preparing a pre-reinforced polymer by mixing polyvinyl chloride polymer with a quantity A of a naturally occurring mineral filler at a temperature lower than the melting temperature of the polyvinyl chloride polymer; and
b) mixing the pre-reinforced polymer obtained under a) with a quantity B of a naturally occurring mineral filler at a temperature higher than 180 °C, to obtain a reinforced polyvinyl chloride polymer.

By the term **"naturally occurring mineral filler"** it is meant a filler which can be found in nature and except for a milling step can be used without the need for a manufacturing process. The denomination mineral indicates an element or chemical compound that is normally crystalline and that has been formed as a result of geological processes. Glass fibre production requires a manufacturing process, as it is produced from $SiO_2$. Wood fibres are not mineral.

It is possible to increase the content of naturally occurring mineral filler without decreasing the workability, with a method wherein the total quantity is divided into two parts and is subdivided over the steps of the method. The naturally occurring mineral filler used in step a) can vary from the naturally occurring mineral filler used in step b).

In a preferred embodiment of the invention, the total quantity of naturally occurring mineral filler expressed in weight% comprises up to 70 weight% of the reinforced polyvinyl chloride polymer. The employability of larger quantities of naturally occurring mineral filler offers more possibilities for directing the characteristics of the product, for example the reduction of the coefficient of linear thermal expansion (CLTE). The term **"coefficient of linear thermal expansion"** describes by how much a material will expand for each incremental change in temperature, as given by the formula:

$$\alpha = \frac{dl}{l_0 \times dT}$$

where:

$dl$ = the change in length of material in the direction being measured
$l_0$ = initial length of material in the direction being measured
$dT$ = the change in temperature over which dl is measured

Coefficients of linear thermal expansion can be measured by techniques known to a person skilled in the art. Coefficients of linear thermal expansion may for instance be determined with a silica dilatometer according to ASTM D 696 or ISO 11359.

Contrary to other substances, polyvinylchloride does not have a well-determined melting temperature but rather a melting range going from 130 °C to 240 °C. A **"temperature lower than the melting temperature"** of a polyvinylchloride polymer, indicates a temperature lower than 130 °C.

In a preferred method according to the invention, the temperature in step b) is preferably 185 °C, more preferably 190 °C, even more preferably 195 °C, most preferably 200 °C.

Processes like compounding, granulating or extruding are processes that include a thermal treatment and that can be applied in a method according to the invention.

**Compounding**

During a first step a) the polyvinyl chloride polymers and a quantity A of a naturally occurring mineral filler are mixed to form a pre-reinforced polymer. The term **"compound"** can be used as a synonym of **"pre-reinforced polymer"** in this invention.

Polyvinyl chloride polymer in the form of powder is brought into a hot-mixer at room temperature. Preferably one or more additives are also added. A hot-mixer is usually of the vertical tank-type, and is also called an intensive mixer. A tank-type hot-mixer consists of a vertical, cylinder-shaped tank, equipped with a double wall in which a heating fluid can be pumped around (in order to shorten the mixing cycle). In the lower part of the vessel, mounted on a vertical axis there is an agitator. The agitator is started. This agitator rotates very fast, with a tip speed of 20-50 m/s. Friction is created between the polyvinyl chloride polymer grains because of the high tip speed of the agitator, causing them to heat up. The total quantity of reinforcing naturally occurring mineral filler that should be used in a formulation is preferably divided into two parts, a quantity A and a quantity B. A quantity A of a naturally occurring mineral filler is added at 80°C. Mixing will continue until the mixture has reached a temperature of 120°C.

Despite the limited volume of the mixing vessel and the very low bulk density (weight/volume proportion) and consequently the high volume per kg of naturally occurring mineral filler, the amount of naturally occurring mineral filler in a method according to the invention can be substantially increased.

The term **"phr",** the way it is used in this invention, means **"parts per hundred resin".** The use of this unit is based on 100 parts of polyvinyl chloride polymer and the quantity of other ingredients is expressed in relation to this 100 parts of polyvinyl chloride polymer. Starting from 25 phr of naturally occurring mineral filler a compound is called highly filled.

In a preferred embodiment the quantity A of a naturally occurring mineral filler is between 0-2 phr, between 2-25 phr or between 25-40 phr. In a production environment where the processing equipment is in close proximity of the mixer, a quantity A between 25-40 phr is advantageous, since there is little transport. For situations with an average requirement for transportation, a quantity A between 2-25 phr is advantageous. With excellent feeders, the quantity A can be decreased to between 0-2 phr. In a preferred embodiment, the quantity A of a naturally occurring mineral filler in step a) is between 0-2 phr, between 2-25 phr or between 25-40 phr.

A method according to the invention does not have the problem that when a larger quantity of naturally occurring mineral filler is used, the hot-mixer becomes highly filled while the mass is only relatively small, so that insufficient friction can be obtained in the hot-mixer and no intimate mixing of the ingredients can be obtained. A method according to the invention has the effect that a very intensive mixing occurs between the polyvinyl chloride polymer, the naturally occurring mineral filler and the additives used. The mixture is homogeneous.

After reaching a temperature of 120 °C, the mixture is discharged into a cold-mixer. A cold-mixer can be a vertical tank-type mixer, but also a horizontal ribbon blender, or a horizontal plough-share mixer. If a vertical tank-type cold-mixer is used, the mixer will consist of a vertical cylinder-shaped tank, equipped with a double wall in which a cooling fluid can be pumped around. An agitator is mounted on a vertical axis, in the lower part of the vessel. If a horizontal cold-mixer is used, the mixer will consist of a horizontal cylinder-shaped tank, equipped with a double wall, in which a cooling fluid can be pumped around. An agitator is then mounted centrally in the vessel on a horizontal axis. Typically, the volume of the cold-mixer is 2-4 times the volume of the hot-mixer. The wall of the cold-mixer is cooled with cooling water (10-15°C), and the mixture is agitated slowly. Typically, the agitator of a cold-mixer rotates with a tip speed of 4-8 m/s. The mixture is cooled to a temperature of 40 °C.

The pre-reinforced polymer obtained with the method mentioned above according to the invention is discharged into a suitable storage medium, such as a bigbag or silo, and is ready for further use.

With a method according to the invention, problems like segregation, demixing of the naturally occurring mineral filler and of the PVC during the transportation, the formation of deposits in the transportation pipes, will be reduced.

## Extrusion

The pre-reinforced polymer undergoes a further thermal treatment during which the temperature is raised to above the melting temperature, for example with the assistance of an extruder. In a preferred embodiment according to the invention, a temperature higher than 180 °C is obtained by extrusion. Using an extruder has the advantage that a mixture goes through various temperature zones and while being heated it is continuously mixed and kneaded. The effect is optimal heat absorption, optimal dispersion of the naturally occurring mineral filler, continuous production and increased process efficiency.

An extruder consists of a cylinder with one or more screws. The cylinder is equipped with a feed throat. Coupled to the feed throat there are one or more dosing units. The feed from the dosing units is brought onto the screw(s) and heated in the cylinder to a temperature above 180 °C. Typically, the temperature of the cylinder of an extruder is set per zone. In this way the temperature of the different zones can rise from 160 °C in the first zone to 200°C in a zone at the extremity of the die. Downstream with respect to the feed throat, the extruder is equipped with a degassing zone (equipped with a vacuum pump) in order to eliminate humidity and air. For the method of the invention a single-screw extruder, a counter-rotating parallel double-screw extruder or a counter-rotating conical double-screw extruder can be used. The advantage of a counter-rotating extruder is that high shear forces are avoided. Consequently burning of the product is avoided.

The pre-reinforced polymer and the reinforcing naturally occurring mineral filler are transported from their own storage medium to a dosing unit on the extruder. An extruder equipped with a first dosing unit for pre-reinforced polymer and a second dosing unit for adding a quantity B of naturally occurring mineral filler, should preferably be used. In a preferred method according to the invention, the pre-reinforced polymer obtained in step a) and a quantity B of the naturally occurring mineral filler are added to an extruder separately.

The pre-reinforced polymer and the naturally occurring mineral filler flow from these dosing units through a feed throat onto the screw(s) of the extruder. The pre-reinforced polymer and the naturally occurring mineral filler stream can either be brought onto the screw(s) of the extruder through the same feed throat, or the reinforcing naturally occurring mineral filler can be added through a second feed throat, downstream compared to the feed throat for the pre-reinforced polymer. It is also possible to replace a part of the pre-reinforced polymer with scrap. The scrap can be brought onto the screw(s) of the extruder through a third dosing unit or preferably can be pre-mixed with the pre-reinforced polymer in a mixing station. By the term **"scrap"** recyclable PVC-based materials are meant that are the result of starting up or shutting down extrusion lines, or PVC-based materials that are out-of-specification. In a preferred embodiment, a method comprises extruding a formulation comprising at least 10 weight% scrap.

Moreover, the method according to the present invention provides a reinforced polyvinylchloride polymer based on a formulation comprising polyvinylchloride polymer in a quantity preferably between 30 and 70 weight%, more preferably between 35 and 70, most preferably between 40 and 70 weight% of the formulation. Moreover, the method according to the present invention provides a reinforced polyvinylchloride polymer based on a formulation comprising naturally occurring mineral filler in a quantity preferably between 30 and 70 weight%, more preferably between 35 and 70 weight%, most preferably between 40 and 70 weight% of the formulation.

Moreover, the method according to the present invention provides a reinforced polyvinylchloride polymer based on a formulation comprising:

- polyvinylchloride polymer in a quantity preferably between 30 and 70, more preferably between 35 and 70, most preferably between 40 and 70 weight% of the formulation; and
- filler in a quantity preferably between 30 and 70 weight%, more preferably between 35 and 70 weight%, most preferably between 40 and 70 weight% of the formulation.

In a preferred embodiment, the total number of naturally occurring mineral filler parts (A+B) with regards to the number of polyvinyl chloride polymer parts is preferably between 0.4 and 2.5, more preferably between 0.6 and 1.5, most preferably between 0.8 and 1.2. In a preferred embodiment, the total quantity of naturally occurring mineral filler (A+B) with regards to the quantity of polyvinyl chloride polymer is preferably between 0.4 (about 30 weight% naturally occurring mineral filler / 70 weight% PVC) and 2.5 (about 70 weight% naturally occurring mineral filler / 30 weight% PVC), more preferably between 0.6 and 1.5, most preferably between 0.8 and 1.2. The advantage of this proportion is that there will be enough polymer present with regards to the naturally occurring mineral filler to obtain complete melting and mixing in an extruder, with a homogeneous mixture as a result.

The pre-reinforced polymer brought onto the cylinder screw is melted by heating it above the melting temperature of the polyvinyl chloride polymer. It blends further with the introduced naturally occurring mineral filler. This melt stream moves forward through the cylinder of the extruder.

In a preferred embodiment the ratio of quantity A of a naturally occurring mineral filler over quantity B of a naturally occurring mineral filler is at least 0.1, preferably at least 0.2, more preferably at least 0.25, most preferably at least 0.3. An advantage of this ratio is that the compound shows an almost optimal flow and compressibility. This is unexpected, since it is known that it is hard for filled compounds to flow through a feed throat into a cylinder of an extruder and that they do not flow fast enough to properly fill the first screw flights with compound, which leads to an inefficient melting and mixing and consequently a bad quality of the final product. It is also known that a highly filled compound has a very high compressibility. Consequently, the extruder screw(s) can compact the compound only to a limited extent, which is insufficient to prompt the required friction needed for the material to melt. Because of this, the compound comes out of the extruder as a powder or only as a sintered product, and not as a proper melt.

A reinforced polymer obtained according to the above mentioned method can be further processed so that the desired shape will be obtained, for example as granules or a profile. Obtaining a profile according to a method of the invention has a good workability. It can be worked with standard carpenter tools like a drill or a saw. It can be nailed or screwed without cracking or splintering of the profile. It can serve as a basis for a suspended structure and closing (e.g. window fittings).

**Granulation**

The method of step b) preferably includes granulation. In a preferred method according to the invention, the pre-reinforced polymer obtained from step a) is granulated in step b). For this purpose the pre-reinforced polyvinyl chloride polymer obtained from step a) and a quantity B of a naturally occurring mineral filler will be extruded with an extruder fit with a granulation die.

For granulation a single-screw extruder, a reciprocating single-screw extruder (kneader), a planetary roller extruder or a counter-rotating parallel or conical double-screw extruder can be used. The extruder is equipped with a dosing unit for the compound and with a second dosing unit for the addition of a quantity B of a naturally occurring mineral filler. The melt stream of the extrusion process is pressed through the granulation die. In case of a reciprocating single screw extruder, the melt stream leaving the cylinder of the main extruder is brought to the granulation die via a second short transportation screw. In other types of extruders, the final part of the cylinder of the extruder is equipped with a granulation die. The temperature of the granulation die is 180-190 °C. When leaving the granulation die, the melt stream forms thin strands (diameter: 2-4 mm). The strips are cut into 1 to 3 mm long pieces by a rotating knife (if necessary, under water). These granules are blown towards a drying and cooling tower; they are cooled and discharged into a suitable storage medium. The granules are ready for further use.

Granulation has the advantage that problems with segregation, which can arise during the transportation of a highly filled compound, which is a pre-reinforced polymer based on a high quantity of naturally occurring mineral filler, can be avoided. The choice between granulation or no granulation mainly depends on the layout of a production plant (the transportation distance for the compound) and on economical factors (financial cost of granulation).

Consequently the invention provides a method in which the pre-reinforced polymer obtained in step a) is granulated in step b). In addition, the invention provides a granulate obtained by a method according to an embodiment of the invention. In an embodiment of the invention, the granulate comprises a foaming agent.

### Producing a reinforced Polyvinyl chloride device

In a preferred method according to the invention, the reinforced polyvinyl chloride polymer obtained in step b) is processed into a reinforced polyvinyl chloride device, preferably a profile, for example by means of profile extrusion. By applying a method according to the invention, highly filled raw materials can be applied in the production of devices. Moreover, the production of devices can take place in the same plant and/or with the same apparatus, which offers an economical advantage. By avoiding the use of glass fibres, there will be less abrasion of the extruder and of the die. The result of this is that profiles can be produced which have an improved consistency of size, and that the percentage of the rejections due to size inconsistencies of the profiles is reduced. An additional advantage is that high-quality devices will become available for highly exacting applications, like for example reinforcing bars for window profiles (stiffness), precision parts (size consistency), wall and floor coverings (fire resistance, rot resistance and size consistency).

For the production of a reinforced polyvinyl chloride device, a pre-reinforced polymer obtained from step a) or granules obtained by carrying out a granulation in step b) can be used.

### Direct extrusion

In a direct extrusion process, a pre-reinforced polymer obtained in a) is mixed with a quantity B of a naturally occurring mineral filler at a temperature higher than 180°C.

In a preferred method according to the invention, a temperature higher than 180°C is obtained by extrusion. In a preferred embodiment of the invention, the pre-reinforced polymer obtained in step a) and a quantity B of a naturally occurring mineral filler are extruded. This takes place with a method described above under the header extrusion. To produce a device, the extruder is equipped with a die with an opening shaped in the form of the desired device. In order to obtain the desired shape, the melt stream leaving the extruder is carried through the opening of a die. Subsequently the melt is passed through a calibration unit and cooled in a water tank. Sawing off pieces of the desired dimensions gives ready-for-use reinforced polyvinyl chloride devices.

### Extrusion of granules

Granules obtained by granulation in step b) will be transported from their storage medium to a dosing unit on an extruder. From this dosing unit, the granules flow through a feed throat on the screw(s) of the extruder. Here the granules are heated and melted. The melt is then transported to the shaping die via the extrusion screw(s). In the die, which has the shape of the desired device, the melt stream is pressed into the desired shape. Subsequently the melt is passed through a calibration unit and cooled in a water tank. Sawing off pieces of the desired dimensions provides ready-for-use reinforced polyvinyl chloride devices.

In a further aspect the method according to the present invention provides for a pre-reinforced polymer, a reinforced polymer and a polyvinyl chloride element. A method according to the invention includes the preparation, the thermal treatment of a formulation comprising a polyvinyl chloride polymer, a naturally occurring mineral filler and one or more additives.

In a preferred embodiment according to the invention a polyvinyl chloride polymer is selected from a group comprising S-PVC, M-PVC, E-PVC. The terms **"S-PVC", "M-PVC", "E-PVC"** the way they are used in this invention, respectively mean polyvinyl chloride polymers obtained through suspension polymerization of vinyl chloride (S-PVC or suspension-PVC), polyvinyl chloride obtained through bulk polymerization of vinyl chloride (M-PVC or mass-PVC), polyvinyl chloride obtained through emulsion polymerization of vinyl chloride (E-PVC or emulsion-PVC). S-PVC is used in a more preferred embodiment according to the invention. The polyvinyl chloride polymer provides resistance, flexibility, hardness and durability to the final product. The polymer can be obtained commercially as a powder. The polyvinyl chloride polymer can be an industrial product or it can be used in the form of scrap.

In a preferred embodiment according to the invention, a polyvinyl chloride polymer is used with a K-value between 50 and 68. The **"K-value"** of a polymer is a measure of the molecular weight and it is based on the inherent viscosity. A K-value between 50 and 68 corresponds to an average molecular weight of about 40000-100000 g/mol. Depending on the application, a polyvinyl chloride polymer with a higher or lower K-value can be selected. In a preferred method according to the invention, the polyvinyl chloride polymer preferably has a K-value between 50 and 68, more preferably between 60 and 68, most preferably between 64 and 68. In another preferred method according to the invention, the polyvinyl chloride polymer preferably has a K-value between 50 and 60, more preferably between 50 and 58, most preferably around 57.

A polyvinyl chloride polymer with a low K-value can be foamed and processed easily. A polyvinyl chloride polymer preferably has a K-value of 57 for foamed applications, and a K-value of 65 for non-foamed applications. The advantages of these K-values are a good workability and mechanical features.

In a preferred embodiment according to the invention, the naturally occurring mineral filler is selected from a group including wollastonite, vermiculite, talc, mica, and/or combinations thereof. In a preferred embodiment according to the invention, the modulus or stiffness and the coefficient of linear thermal expansion of a final product can be improved by using a naturally occurring mineral filler.

In a more preferred embodiment according to the invention, the naturally occurring mineral filler is talc and/or mica. Talc is a hydrated magnesium silicate, which has the following chemical structural formula: $Mg_3Si_4O_{10}(OH)_2$. To be applied it is ground to a powder with an average grain size between 0.5 $\mu$m and 20 $\mu$m. It is commercially available. Mica should preferably be of the muscovite kind, this is a phyllosilicate mineral with the chemical structural formula $KAl_2(AlSi_3)O_{10}(OH,F)_2$. For its application it is ground to a powder with an average grain size between 0.5 $\mu$m and 40 $\mu$m. It is commercially available. The advantage of these naturally occurring mineral fillers is their good price-performance balance. They do not have the high price of aramid or carbon fibres. Moreover, they do not suffer from the abrasive characteristics of glass fibres, so machine parts have to be repaired or replaced less often.

In a preferred embodiment, the mineral naturally occurring mineral filler is talc and/or mica with an average grain size between 0.5 and 5 $\mu$m. In a more preferred embodiment, the mineral naturally occurring mineral filler is talc and/or mica with an average grain size between 0.5 and 3 $\mu$m for talc and between 30 and 35 $\mu$m for mica. Preferably the grains have an elongated shape and are platelets. Average grain size of a naturally occurring mineral filler may be determined by measuring techniques known to a person skilled in the art. For example, the method as described in ISO 13320.

In addition to polyvinyl chloride polymer, a formulation can also contain one or more additives. In an embodiment of the invention, a method further comprises the step of adding a processing aid in a quantity of between 0 and 15 weight%; preferably between 5 and 15 weight%.

In a preferred embodiment according to the invention, a formulation comprises as additives a heat stabilizer, a lubricant and a processing aid and requires no further additives. In another preferred embodiment according to the invention, in addition to a heat stabilizer, a lubricant and processing aids, at least one other additive is used selected from a group comprising toughening agents, foaming agents, light stabilizers and colouring agents. In a more preferred embodiment according to the invention, at least a heat stabilizer, lubricant and processing aid are used.

In a preferred embodiment according to the invention, a heat stabilizer is added and it is selected from a group of stabilizers of the CaZn, Ca-organic, Sn, or Pb type. The CaZn types referred to are calcium-zinc systems, and they are based on calcium and zinc salts of fatty acids in combination with costabilizers. The Ca-organic types are stabilizers based on calcium salts of fatty acids in combination with costabilizers. Sn types are stabilizers based on organic stannous compounds. The Pb types are stabilizers based on (in)organic lead salts. A heat stabilizer ensures the delay of the dehydrochlorination process of polyvinyl chloride and it prevents the polyvinyl chloride from burning during a thermal treatment, like extrusion. For applications in Europe there is a preference for CaZn and Ca-organic stabilizers, whereas for applications in North America Sn stabilizers are preferred. The reasons for this are historic. North America has always preferred Sn stabilizers, whereas Europe has always preferred Pb stabilizers. Since Pb stabilizers will disappear (at the latest in 2015) the preference in Europe goes to CaZn and Ca-organic.

In another preferred embodiment, a heat stabilizer is of the blocked thiol type. By the term **"blocked thiol"** it is meant a thiol of formula B-S-R wherein B and R represent an organic portion. Blocked thiol and organic-based heat stabilizer are used interchangeably. An organic-based heat stabilizer comprises a zinc salt, and at least one sulphur compound selected from the group consisting of a free mercaptan, a zinc mercaptide, and a latent mercaptan. Preferably the organic-based heat stabilizer is an organic-based composition comprising at least one organic-based heat stabilizer component, and at least one stabilizer modifying component selected from the group consisting of liquid calcium soap and 1,3,5-tris (2-hydroxyethyl) cyanuric acid; wherein the organic-based heat stabilizer component comprises a zinc salt and at least one sulfur compound selected from the group consisting of a free mercaptan, a zinc mercaptide, and a latent mercaptan; and wherein the liquid calcium salt is a solution of a calcium salt which is liquid at 105 °C and is free from other metal salts.

Use of a blocked thiol type stabilizer system is advantageous as it is essentially free of heavy metals and harmful bisphenol A co-stabilizer. It is an environmentally friendly type of stabilizer. A further advantage is that this type of stabilizer boosts recyclability. PVC stabilized with a blocked thiol type heat stabilizer is compatible with other stabilizing systems such as the CaZn, Ca-organic or Sn type stabilizers. It can be safely combined with recycled PVC. It provides good colour stability in PVC profiles. In an embodiment of the invention, a profile comprises an organic-based thermal stabilizer. In a further embodiment of the invention, a profile comprising up to 10 weight% recycled PVC, comprises a blocked thiol type stabilizer. In a further embodiment of the invention, a profile comprising up to 25 weight% recycled PVC, comprises a blocked thiol type stabilizer.

In a preferred embodiment according to the invention, the total quantity of stabilizers in a formulation is between 1 and 4 weight%, more preferably between 2 and 4 weight%, most preferably between 3 and 4 weight%. In a more preferred embodiment of the invention, the total quantity of stabilizers in a formulation is maximum 1.5 weight% in case Sn stabilizers are used, 5 weight% in case Pb type stabilizers are used, 2-4 weight% when using CaZn or Ca-organic type stabilizers, 4 weight% when a blocked thiol type is used. In a preferred embodiment according to the invention, a method further comprises the step of adding a thermal stabilizer in a quantity of between 0 and 5 weight%; preferably between 1 and 4 weight%; wherein said thermal stabilizer is preferably a blocked thiol type stabilizer.

A formulation can also contain a lubricant, for example to improve the flow of the polymer melt in the extruder. In a preferred embodiment according to the invention, a lubricant is selected from a group including polyethylene waxes, oxidized polyethylene waxes, paraffin waxes, fatty acid ester waxes (for example distearyl phthalate), fatty acids salts (for example calcium stearate), fatty acids, fatty acids alcohols, amine waxes and/or their combinations. In a preferred embodiment according to the invention, the total quantity of lubricants in a formulation is preferably between 0 and 2 weight%, more preferably between 1 and 2 weight%, most preferably between 1.5 and 2 weight%.

Moreover, a processing aid can be used. In a preferred embodiment according to the invention, a processing aid is selected from a group comprising methacrylate copolymers, acrylate copolymers, methacrylate terpolymers, acrylate terpolymers and/or a combination thereof. In a preferred embodiment according to the invention, the total quantity of processing aid in a formulation is between 0 and 15 weight%, more preferably between 5 and 15 weight%, most preferably between 8 and 15 weight%. For example, this use supports the workability of a polymer by promoting fusion, it improves the melting strength, it changes the surface characteristics, and it ensures an improved release of the melt from metal parts.

A toughening agent can be added, in order to improve the impact resistance of the final product. In a preferred embodiment according to the invention, the total quantity of toughening agents in a formulation is between 0 and 5 weight%, more preferably between 1 and 5 weight%, most preferably between 2 and 5 weight%.

A foaming agent will be used if a foamed end product is desired. In a preferred embodiment according to the invention, a foaming agent is selected from a group including foaming agents of the types: sodium (bi)carbonate, azodicarbonamide, p,p'-oxybis (benzene sulfonyl) hydrazide (OBSH). Azodicarbonamide is used in a more preferred embodiment according to the invention. A good price-performance balance is obtained by means of an azodicarbonamide. In a preferred embodiment according to the invention, the total quantity of foaming agents in a formulation preferably is between 0 and 5 weight%, more preferably between 1 and 5 weight%, most preferably between 2 and 5 weight%.

A light stabilizer can be added in order to slow down the degradation of polyvinyl chloride polymer due to exposure to light. In a preferred embodiment according to the invention, a light stabilizer is selected from a group including a stabilizer of the titanium dioxide type, of the benzotriazole type, or of the 2-hydroxybenzophenone type and/or combinations thereof. Titanium dioxide is used in a more preferred embodiment according to the invention. In a most preferred embodiment according to the invention, the total quantity of light stabilizers in a formulation is preferably between 0 and 10, more preferably between 2 and 8, most preferably between 4 and 6 weight%.

Coloured reinforced polyvinyl chloride polymers can be obtained by adding a colouring agent to a formulation. In a preferred embodiment according to the invention, a colouring agent will be selected from a group including metal salt, metal oxide, mixed metal oxide and/or combinations thereof. A mixed-metal oxide is used in a more preferred embodiment according to the invention. This shows the best aging behaviour. In a preferred embodiment according to the invention, the total quantity of colouring agents in a formulation is preferably between 0 and 5 weight%, more preferably between 1 and 4 weight%, most preferably between 2 and 3 weight%.

A reinforced polyvinyl chloride device obtained using the method according to the invention can be fit with a covering layer or cap. The material for the cap layer is selected from a group comprising poly((meth))acrylate), poly(butyl acrylate-styrene-acrylonitrile), polyvinylidene fluoride, polyvinyl fluoride, poly(styrene- acrylonitrile), a light proof polyvinyl chloride material and/or a combination thereof. In a preferred embodiment according to the invention, the total quantity of additive for the covering layer in a formulation is preferably between 0 and 6 weight%, more preferably between 0 and 4 weight%, most preferably between 0 and 2 weight%.

The methods according to the present invention provide for a reinforced polyvinylchloride polymer based on a formulation including:

- polyvinylchloride polymer in a quantity preferably included between 30 and 70, more preferably between 35 and 70, most preferably between 40 and 70 weight% of the formulation;
- naturally occurring mineral filler in a quantity preferably included between 30 and 70 weight%, more preferably between 35 and 70 weight%, most preferably between 40 and 70 weight% of the formulation.

In an embodiment, a reinforced polyvinylchloride polymer obtained by the methods claimed herein is based on a formulation comprising:

- polyvinylchloride polymer in a quantity of at least 30 weight%, preferably at least 35 weight%, more preferably at least 40 weight%, most preferably at least 45 weight% of the formulation; and
- a naturally occurring mineral filler in a quantity of at least 30 weight%, preferably at least 35 weight%, more preferably at least 40 weight%, most preferably at least 45 weight% of the formulation.

In an embodiment, a reinforced polyvinylchloride polymer is based on a formulation comprising:

- polyvinylchloride polymer in a quantity of at least 30 weight%, preferably at least 35 weight%, more preferably at least 40 weight%, most preferably at least 45 weight% of the formulation; and
- a naturally occurring mineral filler in a quantity of at least 30 weight%, preferably at least 35 weight%, more preferably at least 40 weight%, most preferably at least 45 weight% of the formulation; whereby said naturally occurring mineral filler is talc and/or mica, preferably talc.

A polyvinyl chloride polymer obtained by the methods claimed herein based on a formulation according to a preferred embodiment of the invention has increased naturally occurring mineral filler contents. These highly filled polyvinylchloride polymers are more reinforced, have increased fire resistant properties, increased rigidity and increased stiffness.

Disclosed herein is a pre-reinforced polymer, obtainable by step a) of a method according to the invention. In a preferred embodiment, a pre-reinforced polymer, obtainable with a method according to the invention, comprises between 0 and 2 phr of naturally occurring mineral filler. In another preferred embodiment, a pre-reinforced polymer, obtainable with a method according to the invention, comprises between 2 and 25 phr of naturally occurring mineral filler. In another preferred embodiment, a pre-reinforced polymer, obtainable with a method according to the invention, comprises at least 25 phr of naturally occurring mineral filler. Highly filled compounds (> 25 phr of naturally occurring mineral filler), obtainable with a work method according to the invention, have a more stable, homogeneous composition. This leads to derived products that are more uniform and to a reduction in failure percentages.

An additional aspect of the invention provides a reinforced polymer obtained with a method according to the invention. More heavily reinforced polymers become available. Reinforced polymers obtained with a method according to the invention have increased rigidity, increased stiffness, and a reduced coefficient of linear thermal expansion.

In a further aspect the invention provides a device obtained by extrusion of a pre-reinforced, granulate, or reinforced polymer, by using a method according to the invention. This device can be strongly reinforced, since the method allows the use of large quantities of naturally occurring mineral filler. Despite the large quantities of naturally occurring mineral filler, the device is of high quality, with a homogeneous surface, without bulging naturally occurring mineral filler parts. Moreover, the device is rigid and has an increased stiffness. Good reinforcement properties are obtained even without using reinforcing fibre materials. This results in a good price/performance balance. The device can be used for applications where improved properties are requested, for example increased stiffness and/or reduced expansion when exposed to heat.

It is obvious that within its scope the description of this invention can be related to alternative embodiments of the invention.

The invention will be illustrated based on the following non-limiting examples.

Formulating and compounding

Example 1

To produce a batch quantity of 100 kg, the following quantities were brought in a hot-mixer of the Periplast brand, with a volume of 250 litres: 100 parts of polyvinyl chloride polymer, 3.5 parts of CaZn stabilizer, 1.9 parts of lubricant, 8 parts of processing aid, 6 parts of toughening agent and 25 parts of talc. The ingredients were mixed by means of an agitator with a blade tip speed of 38 m/s. The mantle temperature was 80 °C. Upon reaching the temperature of 120 °C, the mixture was discharged into a cold-mixer of the Periplast brand, with a volume of 800 litres. The mixture was stirred with a blade tip speed of 6 m/s. In order to cool the mixture, the mantle temperature was set at 10 °C. The mixture was cooled until a discharge temperature of 40 °C was reached.

Example 2

In the method of example 1, the 25 parts of talc were replaced by 25 parts of mica.

Example 3

In the method of example 1, the 3.5 parts of CaZn stabilizer were replaced with 1.5 parts of Sn stabilizer.

Example 4

In the method of example 1, the 3.5 parts of CaZn stabilizer were replaced with 1.5 parts of Sn stabilizer and the 25 parts of talc were replace by 25 parts of mica.

Example 5

In the method of example 1, the 3.5 parts of CaZn stabilizer were replaced with 4 phr of a heat stabilizer of the blocked thiol type.

Table 1: examples of typical formulations according to the invention

|  | Example1 | Example 2 | Example 3 | Example 4 | Example 5 |
|---|---|---|---|---|---|
| *Formulation* | (phr) | (phr) | (phr) | (phr) | (phr) |
| PVC K-value 65 | 100 | 100 | 100 | 100 | 100 |
| CaZn stab | 3.5 | 3.5 |  |  |  |
| Sn stab |  |  | 1.5 | 1.5 |  |
| Blocked thiol type stabilizer |  |  |  |  | 4.0 |
| Lubricant | 1.9 | 1.9 | 1.9 | 1.9 | 1.9 |
| Processing aid | 8 | 8 | 10 | 10 | 8 |
| Toughening agent | 6 | 6 | 5 | 5 | 6 |
| Talc (d50 = 1,9 $\mu$m) | 25 + 75 (*) |  | 25 + 75 (*) |  | 25 + 75 (*) |
| Mica (d50 = 33 $\mu$m) |  | 25 + 75 (*) |  | 25 + 75 (*) |  |
| (*) 25 phr added in the heat mixer, + x parts added on the extruder. | | | | | |

Granulation

Example 6

Pre-reinforced polymers (compound) obtained from the examples 1 to 5, were granulated according to the method reproduced in Table 2. In total 100 phr of naturally occurring mineral filler were used; 25 phr in the first method step (described above) and 75 phr in the second step. Product streams were led to a reciprocating single-screw extruder of the Buss PR-46 brand, with a throughput of 26 and 14 kg per hour respectively, from a first dosing unit filled with a compound comprising 25 phr of naturally occurring mineral filler and a second dosing unit filled with naturally occurring mineral filler. Each product stream was brought onto the screw of the extruder through a separate feed throat. The kneader and the extruder were operated with the settings represented in Table 2.

Table 2: Example of a typical granulation method

|  | Example 6 |
|---|---|
| Type | Reciprocating single-screw extruder |
| Brand | Buss PR-46 |
| *Dosing unit* |  |
| Dosing unit 1 (compound) | 26 kg/h |
| Dosing unit 2 (naturally occurring mineral filler) | 14 kg/h |
| Naturally occurring mineral filler quantity in compound | 25 phr |
| Additionally dosed naturally occurring mineral filler | 75 phr |
| Dose method | Each stream through a separate feed throat |
| *Kneader* |  |
| Screw diameter | 46 mm |
| Screw length | 11 D (*) |
| Temperature kneader zone 1 | 190 °C |
| Temperature kneader zone 2 | 190 °C |
| Screw temperature | 130 °C |
| Screw speed | 216 rpm |
| *Extruder* |  |
| Screw diameter | 70 mm |
| Screw length | 6D (*) |
| Cylinder temperature | 190 °C |
| Screw temperature | 130 °C |
| Screw speed | 33 rpm |
| Temperature granulation die | 200 °C |
| Throughput | 40 kg/h |
| (*) 11 D = 11x screw diameter, 6D = 6x screw diameter, rpm= rotations per minute | |

Producing a reinforced Polyvinyl chloride device

Example 7

Granulated reinforced polymers from example 6 were brought into a dosing unit of a counter-rotating parallel double-screw extruder of the Bandera brand. Profiles were extruded from this granulate according to the method represented in Table 3.

Example 8

Pre-reinforced polymers from examples 1 to 5 were brought into a dosing unit of a counter-rotating parallel double-screw extruder of the Bandera brand. The remainder of the naturally occurring mineral filler was brought into a second dosing unit of the extruder. Both product streams were dosed together in order to obtain the desired quantity of naturally occurring mineral filler, and profiles were extruded according to the method represented in Table 3.

Table 3: A typical example of a profile extrusion from a granulate and from a direct profile extrusion

|  | Example 7 | Example 8 |
|---|---|---|
| Type | Counter-rotating parallel double-screw extruder | Counter-rotating parallel double-screw extruder |
| Brand | Bandera | Bandera |
| *Dosing unit* |  |  |
| Dosing unit 1 | 98 kg/h (granulate) | 58 kg/h (compound) |
| Dosing unit 2 (naturally occurring mineral filler) | - | 30 kg/h |
| Naturally occurring mineral filler quantity in compound |  | 25 phr |
| Additionally dosed naturally occurring |  | 75 phr |
| mineral filler |  |  |
| Dosing method |  | Both flows through the same feed throat |
| *Extruder* |  |  |
| Screw diameter | 66 mm | 66 mm |
| Screw length | 20D (*) | 20D (*) |
| Cylinder temperature zone 1 | 185 °C | 185 °C |
| Cylinder temperature zone 2 | 190 °C | 190 °C |
| Cylinder temperature zone 3 | 190 °C | 190 °C |
| Cylinder temperature zone 4 | 190 °C | 190 °C |
| Cylinder temperature zone 5 | 195 °C | 195 °C |
| Temperature adapter zone 1 | 185 °C | 185 °C |
| Temperature adapter zone 2 | 190 °C | 190 °C |
| Temperature die zone 1 | 200 °C | 200 °C |
| Temperature die zone 2 | 200 °C | 200 °C |
| Temperature die zone 3 | 200 °C | 200 °C |
| Temperature die zone 4 | 200 °C | 200 °C |
| Screw temperature | 140 °C | 140 °C |
| Screw speed | 18 rpm | 18 rpm |
| Vacuum degassing | Yes | Yes |
| Yield | 98 kg/h | 88 kg/h |
| (*) 20D = 20x screw diameter, rpm = rotations per minute | | |

Characteristics of the product

Characteristics obtained in products obtained with a method according to the invention, are reproduced in Table 4. PVC without reinforcement naturally occurring mineral filler has a flexural modulus of 2.7 GPa.

By the term **"flexural modulus"** it is meant the flexural modulus of elasticity, also defined as the ratio of flexural stress over flexural strain. The flexural modulus of a material can be measured by techniques known to a person skilled in the art, for instance according to ISO 178.

| Example | 1 | 2 | 3 | 4 | 5 |
|---|---|---|---|---|---|
| Flexural modulus (GPa) | 10.8 | 15.7 | 10.8 | 15.7 | 10.8 |
| CLTE (mm/mmK) | $10 \times 10^{-6}$ | $19 \times 10^{-6}$ | $10 \times 10^{-6}$ | $19 \times 10^{-6}$ | $10 \times 10^{-6}$ |

**Claims**

1.  Method for the preparation of a reinforced polyvinyl chloride device comprising the steps:

    a) preparation of a pre-reinforced polymer by mixing polyvinyl chloride polymer with a quantity A of a naturally occurring mineral filler at a temperature lower than the melting temperature of the polyvinyl chloride polymer; and
    b) mixing the pre-reinforced polymer obtained under a) with a quantity B of a naturally occurring mineral filler at a temperature higher than 180 °C to obtain a reinforced polyvinyl chloride polymer.

2.  Method according to claim 1, wherein the naturally occurring mineral filler is selected from a group including wollastonite, vermiculite, talc, mica, and/or combinations thereof.

3.  Method according to claims 1 or 2, wherein the naturally occurring mineral filler is talc and/or mica.

4.  Method according to any of claims 1-3, wherein the total quantity of naturally occurring mineral filler (A+B) to the quantity of polyvinyl chloride polymer, is preferably between 0.4 and 2.5, more preferably between 0.6 and 1.5, most preferably between 0.8 and 1.2.

5.  Method according to any of claims 1-4, wherein the ratio of quantity A over quantity B is at least 0.1, preferably at least 0.2, more preferably at least 0.25, most preferably at least 0.3.

6.  Method according to any of claims 1-5, wherein in step a) the quantity A of a naturally occurring mineral filler is between 2-25 phr or between 25-40 phr.

7.  Method according to any of claims 1-6, wherein the total number of naturally occurring mineral filler parts (A+B) with regard to the number of polyvinyl chloride polymer parts is between 0.4 and 2.5.

8.  Method according to any of claims 1-6, wherein the ratio of quantity A over quantity B of naturally occurring mineral filler is at least 0.1, and wherein the total quantity of naturally occurring mineral filler (A+B) to the quantity of polyvinyl chloride polymer is between 60 and 250 phr.

9.  Method according to any of claims 1-6, wherein the naturally occurring mineral filler comprises talc, mica, or both, and wherein the reinforced polyvinyl chloride polymer contains said naturally occurring mineral filler in a quantity between 35 and 70 weight %.

10. Method according to any of claims 1-6, wherein the reinforced polyvinyl chloride polymer comprises at least 35 weight% of polyvinylchloride polymer and at least 40 weight%, preferably at least 45 weight%, of said naturally occurring mineral filler, wherein said naturally occurring mineral filler is talc, mica, or both.

11. Method according to any of claims 1-10, wherein in step a) the temperature lower than the melting temperature of a polyvinylchloride polymer is a temperature lower than 130 °C, and wherein the quantity A of a naturally occurring mineral filler is between 2-25 phr.

12. Method according to any of claims 1-11, wherein a temperature higher than 180°C is obtained by extrusion.

13. Method according to any of claims 1-12, wherein the pre-reinforced polymer obtained in step a) is granulated in step b).

14. Method according to any of claims 1-13, wherein the reinforced polyvinyl chloride polymer obtained in step b) is processed into a reinforced polyvinyl chloride device, preferably a profile, for example by profile extrusion.

15. Method according to any of claims 1 to 14, wherein the reinforced polyvinyl chloride polymer obtained in step b) is processed into a reinforced polyvinyl chloride device by profile extrusion.

16. Method according to any of claims 1-15, wherein the pre-reinforced polymer obtained by step a) and the quantity B of naturally occurring mineral filler, are added to an extruder separately.

17. Method according to any of claims 1-16, wherein the polyvinylchloride polymer preferably has a K-value between 50 and 68, more preferably between 60 and 68, most preferably between 64 and 68; or preferably has a K-value between 50 and 60, more preferably between 50 and 58, most preferably around 57.

18. Method according to any of claims 1-17, further comprising the step of adding a processing aid in a quantity of between 0 and 15 weight%; preferably between 5 and 15 weight%.

19. Method according to any of claims 1-18, further comprising the step of adding a thermal stabilizer in a quantity of between 0 and 5 weight%; preferably between 1 and 4 weight%; wherein said thermal stabilizer is preferably a blocked thiol type stabilizer.


**Patentansprüche**

1. Verfahren zur Herstellung einer Vorrichtung aus verstärktem Polyvinylchlorid, das folgende Schritte umfasst:

   a) Herstellen eines verstärkten Polymers durch Mischen von Polyvinylchlorid-Polymer mit einer Menge A eines natürlich vorkommenden Mineralfüllstoffs bei einer Temperatur, die unter der Schmelztemperatur des Polyvinylchlorid-Polymers liegt; und
   b) Mischen des unter a) erhaltenen vorverstärkten Polymers mit einer Menge B eines natürlich vorkommenden Mineralfüllstoffs bei einer Temperatur von mehr als 180°C zum Erhalt eines verstärkten Polyvinylchlorid-Polymers.

2. Verfahren nach Anspruch 1, bei dem man den natürlich vorkommenden Mineralfüllstoff aus einer Gruppe umfassend Wollastonit, Vermiculit, Talk, Glimmer und/oder Kombinationen davon auswählt.

3. Verfahren nach Anspruch 1 oder 2, bei dem es sich bei dem natürlich vorkommenden mineralischen Füllstoff um Talk und/oder Glimmer handelt.

4. Verfahren nach einem der Ansprüche 1-3, bei dem die Gesamtmenge von natürlich vorkommendem Mineralfüllstoff (A+B), bezogen auf die Menge von Polyvinylchlorid-Polymer, vorzugsweise zwischen 0,4 und 2,5, weiter bevorzugt zwischen 0,6 und 1,5 und ganz besonders bevorzugt zwischen 0,8 und 1,2 liegt.

5. Verfahren nach einem der Ansprüche 1-4, bei dem das Verhältnis von Menge A zu Menge B mindestens 0,1, vorzugsweise mindestens 0,2, weiter bevorzugt mindestens 0,25 und ganz besonders bevorzugt mindestens 0,3 beträgt.

6. Verfahren nach einem der Ansprüche 1-5, bei dem in Schritt a) die Menge A eines natürlich vorkommenden Mineralfüllstoffs zwischen 2-25 phr oder zwischen 25-40 phr liegt.

7. Verfahren nach einem der Ansprüche 1-6, bei dem die Gesamtzahl von Teilen von natürlich vorkommendem Mineralfüllstoff (A+B), bezogen auf die Zahl der Teile Polyvinylchlorid-Polymer, zwischen 0,4 und 2,5 liegt.

8. Verfahren nach einem der Ansprüche 1-6, bei dem das Verhältnis von Menge A zu Menge B von natürlich vorkommendem Mineralfüllstoff mindestens 0,1 beträgt und wobei die Gesamtmenge von natürlich vorkommendem Mineralfüllstoff (A+B), bezogen auf die Menge von Polyvinylchlorid-Polymer, zwischen 60 in 250 phr liegt.

9. Verfahren nach einem der Ansprüche 1-6, bei dem der natürlich vorkommende Mineralfüllstoff Talk und/oder Glimmer umfasst und wobei das verstärkte Polyvinylchlorid-Polymer den natürlich vorkommenden Mineralfüllstoff in einer Menge zwischen 35 und 70 Gew.-% enthält.

10. Verfahren nach einem der Ansprüche 1-6, bei dem das verstärkte Polyvinylchlorid-Polymer mindestens 35 Gew.-

% Polyvinylchlorid-Polymer und mindestens 40 Gew.-%, vorzugsweise mindestens 45 Gew.-%, des natürlich vorkommenden Mineralfüllstoffs umfasst, wobei es sich bei dem natürlich vorkommenden Mineralfüllstoff um Talk und/oder Glimmer handelt.

**11.** Verfahren nach einem der Ansprüche 1-10, bei dem in Schritt a) die Temperatur, die unter der Schmelztemperatur eines Polyvinylchlorid-Polymers liegt, eine Temperatur von weniger als 130°C ist und bei dem die Menge A eines natürlich vorkommenden Mineralfüllstoffs zwischen 2-25 phr liegt.

**12.** Verfahren nach einem der Ansprüche 1-11, bei dem eine Temperatur von mehr als 180°C durch Extrusion erhalten wird.

**13.** Verfahren nach einem der Ansprüche 1-12, bei dem das in Schritt a) erhaltene vorverstärkte Polymer in Schritt b) granuliert wird.

**14.** Verfahren nach einem der Ansprüche 1-13, bei dem man das in Schritt b) erhaltene verstärkte Polyvinylchlorid-Polymer zu einer Vorrichtung aus verstärktem Polyvinylchlorid, vorzugsweise einem Profil, beispielsweise durch Profilextrusion, verarbeitet.

**15.** Verfahren nach einem der Ansprüche 1 bis 14, bei dem man das in Schritt b) erhaltene verstärkte Polyvinylchlorid-Polymer durch Profilextrusion zu einer Vorrichtung aus verstärktem Polyvinylchlorid verarbeitet.

**16.** Verfahren nach einem der Ansprüche 1-15, bei dem man das durch Schritt a) erhaltene vorverstärkte Polymer und die Menge B von natürlich vorkommendem Mineralfüllstoff separat in einen Extruder gibt.

**17.** Verfahren nach einem der Ansprüche 1-16, wobei das Polyvinylchlorid-Polymer vorzugsweise einen K-Wert zwischen 50 und 68, weiter bevorzugt zwischen 60 und 68 und ganz besonders bevorzugt zwischen 64 und 68 aufweist oder vorzugsweise einen K-Wert zwischen 50 und 60, weiter bevorzugt zwischen 50 und 58 und ganz besonders bevorzugt etwa 57 aufweist.

**18.** Verfahren nach einem der Ansprüche 1-17, bei dem man ferner einen Verarbeitungshilfsstoff in einer Menge zwischen 0 und 15 Gew.-% und vorzugsweise zwischen 5 und 15 Gew.-% zugibt.

**19.** Verfahren nach einem der Ansprüche 1-18, bei dem man ferner einen Thermostabilisator in einer Menge zwischen 0 und 5 Gew.-% und vorzugsweise zwischen 1 und 4 Gew.-% zugibt, wobei es sich bei dem Thermostabilisator vorzugsweise um einen Stabilisator vom Typ blockiertes Thiol handelt.

**Revendications**

**1.** Procédé de préparation d'un dispositif en polychlorure de vinyle renforcé comprenant les étapes :

> a) préparation d'un polymère pré-renforcé par mélange d'un polymère de polychlorure de vinyle avec une quantité A d'une charge minérale naturelle à une température inférieure à la température de fusion du polymère de polychlorure de vinyle ; et
> b) mélange du polymère pré-renforcé obtenu en a) avec une quantité B d'une charge minérale naturelle à une température supérieure à 180 °C pour obtenir un polymère de polychlorure de vinyle renforcé.

**2.** Procédé selon la revendication 1, dans lequel la charge minérale naturelle est choisie dans un groupe comprenant la wollastonite, la vermiculite, le talc, le mica, et/ou les combinaisons de ceux-ci.

**3.** Procédé selon la revendication 1 ou 2, dans lequel la charge minérale naturelle est le talc et/ou le mica.

**4.** Procédé selon l'une quelconque des revendications 1 à 3, dans lequel la quantité totale de charge minérale naturelle (A+B) rapportée à la quantité de polymère de polychlorure de vinyle se situe de préférence entre 0,4 et 2,5, mieux entre 0,6 et 1,5, idéalement entre 0,8 et 1,2.

**5.** Procédé selon l'une quelconque des revendications 1 à 4, dans lequel le rapport de la quantité A sur la quantité B est d'au moins 0,1, de préférence au moins 0,2, mieux au moins 0,25, idéalement au moins 0,3.

6. Procédé selon l'une quelconque des revendications 1 à 5, dans lequel à l'étape a) la quantité A d'une charge minérale naturelle se situe entre 2 et 25 phr ou entre 25 et 40 phr.

7. Procédé selon l'une quelconque des revendications 1 à 6, dans lequel le nombre total de parties de charge minérale naturelle (A+B) rapporté au nombre de parties de polymère de polychlorure de vinyle se situe entre 0,4 et 2,5.

8. Procédé selon l'une quelconque des revendications 1 à 6, dans lequel le rapport de la quantité A sur la quantité B de charge minérale naturelle est d'au moins 0,1, et dans lequel la quantité totale de charge minérale naturelle (A+B) rapportée à la quantité de polymère de polychlorure de vinyle se situe entre 60 et 250 phr.

9. Procédé selon l'une quelconque des revendications 1 à 6, dans lequel la charge minérale naturelle comprend du talc, du mica, ou les deux, et dans lequel le polymère de polychlorure de vinyle renforcé contient ladite charge minérale naturelle dans une quantité comprise entre 35 et 70 % en poids.

10. Procédé selon l'une quelconque des revendications 1 à 6, dans lequel le polymère de polychlorure de vinyle renforcé comprend au moins 35 % en poids de polymère de polychlorure de vinyle et au moins 40 % en poids, de préférence au moins 45 % en poids de ladite charge minérale naturelle, ladite charge minérale naturelle étant le talc, le mica, ou les deux.

11. Procédé selon l'une quelconque des revendications 1 à 10, dans lequel à l'étape a) la température inférieure à la température de fusion d'un polymère de polychlorure de vinyle est une température inférieure à 130 °C, et dans lequel la quantité A d'une charge minérale naturelle se situe entre 2 et 25 phr.

12. Procédé selon l'une quelconque des revendications 1 à 11, dans lequel une température supérieure à 180 °C est obtenue par extrusion.

13. Procédé selon l'une quelconque des revendications 1 à 12, dans lequel le polymère pré-renforcé obtenu à l'étape a) est granulé à l'étape b).

14. Procédé selon l'une quelconque des revendications 1 à 13, dans lequel le polymère de polychlorure de vinyle renforcé obtenu à l'étape b) est transformé en un dispositif en polychlorure de vinyle renforcé, de préférence un profilé, par exemple par extrusion de profilé.

15. Procédé selon l'une quelconque des revendications 1 à 14, dans lequel le polymère de polychlorure de vinyle renforcé obtenu à l'étape b) est transformé en un dispositif en polychlorure de vinyle renforcé par extrusion de profilé.

16. Procédé selon l'une quelconque des revendications 1 à 15, dans lequel le polymère pré-renforcé obtenu à l'étape a) et la quantité B de charge minérale naturelle sont ajoutés séparément à une extrudeuse.

17. Procédé selon l'une quelconque des revendications 1 à 16, dans lequel le polymère de polychlorure de vinyle a de préférence une valeur K comprise entre 50 et 68, mieux entre 60 et 68, idéalement entre 64 et 68 ; ou a de préférence une valeur K comprise entre 50 et 60, mieux entre 50 et 58, idéalement d'environ 57.

18. Procédé selon l'une quelconque des revendications 1 à 17, comprenant en outre l'étape d'addition d'un adjuvant de traitement dans une quantité comprise entre 0 et 15 % en poids, de préférence entre 5 et 15 % en poids.

19. Procédé selon l'une quelconque des revendications 1 à 18, comprenant en outre l'étape d'addition d'un stabilisant thermique dans une quantité comprise entre 0 et 5 % en poids, de préférence entre 1 et 4 % en poids, ledit stabilisant thermique étant de préférence un stabilisant de type thiol bloqué.

**EP 2 350 172 B1**

**REFERENCES CITED IN THE DESCRIPTION**

**Patent documents cited in the description**

- US 20070078181 A
- US 4239679 A
- US 4368284 A
- US 4430460 A